(19) Europäisches Patentamt
European Patent Office
Office européen des brevets

(11) **EP 3 267 269 A1**

(12) **EUROPÄISCHE PATENTANMELDUNG**

(43) Veröffentlichungstag:
**10.01.2018   Patentblatt 2018/02**

(51) Int Cl.:
**G05B 17/02** (2006.01)        **B29C 45/76** (2006.01)
**G05B 13/04** (2006.01)        **G05B 19/418** (2006.01)

(21) Anmeldenummer: **16177749.5**

(22) Anmeldetag: **04.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Bauer, Heiko**
**66996 Fischbach bei Dahn (DE)**

(72) Erfinder: **Bauer, Heiko**
**66996 Fischbach bei Dahn (DE)**

(74) Vertreter: **Schwarz und Baldus Patentanwälte**
**Hermann-Schmid-Straße 10**
**80336 München (DE)**

(54) **SIMULATIONS-BASIERTE REGELUNG EINES FERTIGUNGSSYSTEMS**

(57)   Die Erfindung betrifft ein Verfahren und Regelungssystem zur automatischen Regelung eines Fertigungssystems (1), sowie einen Klassifikationsagenten (A) und eine Berechnungseinheit (P). Das Regelungssystem umfasst:

- Ein System (S) zum Erfassen von Sensordaten während des Betriebs des Fertigungssystems (1)

- Einen Klassifikationsagenten (A), der zur Vorverarbeitung der erfassten Sensordaten zum Zwecke der Klassifikation der erfassten Prozesswerte ausgelegt ist, um SOLL-Prozesspunkte für einen fehlerfreien Betrieb des Fertigungssystems (1) zu berechnen,

- Eine Berechnungseinheit (P), die zum Bestimmen eines Einstelldatensatzes als Führungsgröße für das Fertigungssystem (1) dient, wobei die Berechnungseinheit (P) auf einen Simulationsbaustein (SIM) zugreift, der zum Ausführen einer Simulation auf Basis der berechneten SOLL-Prozesspunkte bestimmt ist.

## FIG. 1

**Beschreibung**

Die Erfindung liegt auf den Gebieten der Regelungstechnik und des maschinellen Lernens (machine learning) und betrifft insbesondere ein Verfahren und ein System zur automatischen Regelung eines Fertigungssystems, insbesondere einer Spritzgießmaschine sowie einen Klassifikationsagenten und eine Berechnungseinheit.

Bei einer Spritzgießmaschine oder bei anderen Fertigungsmaschinen, besteht eine wichtige Aufgabe darin, diese so einzustellen, dass ein möglichst optimaler Betrieb sichergestellt werden kann. Dieser kennzeichnet sich u.a. durch die Minimierung von Fehlern, wie z.B. Ausschuss. Zur Lösung dieser Einstellungsaufgabe ist es notwendig, zu berechnen, welche Einstellungen zu guten Teilen und welche zu Ausschuss führen.

Systeme, mit denen bei laufender Produktion mithilfe einer Prozessüberwachungseinheit Prozesswerte von der Fertigungsmaschine mittels zugeordneten Sensoren erfasst werden, sind im Stand der Technik bekannt. So offenbart die DE 102012104885 A1 ein Verfahren zur Beseitigung von Ausschuss in einer Fertigungsmaschine. Dieses System lehrt, optimierte Prozesspunkte zu finden bzw. automatisch zu definieren.

In der Praxis hat sich dieses System jedoch dahingehend als defizitär erwiesen, dass eine automatische Regelung der Spritzgießmaschine (oder eines anderen Fertigungssystems) nicht möglich ist. Die automatische Berechnung von Einstelldaten fehlt hier.

Hier setzt die vorliegende Anmeldung an, um diesen Nachteil zu überwinden. Eine Aufgabe der vorliegenden Erfindung besteht somit darin, ein Fertigungssystem verbessert zu regeln. Insbesondere soll basierend auf automatischen Berechnungen ein Einstelldatensatz zur Regelung der Fertigungsmaschine generiert werden, bei dem erfasste Sensordaten während des Betriebs der Fertigungsmaschine berücksichtigt werden.

Diese Aufgabe wird durch den jeweiligen Gegenstand der beiliegenden nebengeordneten Ansprüche gelöst, insbesondere durch ein Verfahren zur automatischen Regelung, ein Regelungssystem, einen Klassifikationsagenten und eine Berechnungseinheit.

Gemäß einem ersten Aspekt betrifft die Erfindung ein Verfahren zur automatischen Regelung eines Fertigungssystems, umfassend folgende Verfahrensschritte:

- Erfassen von Sensordaten während des Betriebs des Fertigungssystems
- Vorverarbeiten der erfassten Sensordaten zur Klassifikation der erfassten Prozesswerte, um SOLL-Prozesspunkte für einen fehlerfreien Betrieb des Fertigungssystems zu berechnen,
- Bestimmen eines Einstelldatensatzes als Führungsgrößen des Fertigungssystems durch Ausführen einer Simulation auf Basis der berechneten SOLL-Prozesspunkte.

Im Folgenden werden die im Rahmen dieser Anmeldung verwendeten Begrifflichkeiten näher erläutert.

In einer wichtigen Ausführungsform der Erfindung ist die Fertigungsmaschine eine Spritzgießmaschine zur Produktion von Kunststoffformteilen mittels eines Werkzeugs zur Formung der Formteile. In alternativen Ausführungsformen der Erfindung kann es sich bei dem Fertigungssystem auch um ein logistisches System oder um ein anderes Produktionssystem handeln.

Der Begriff Sensordaten stammt aus der künstlichen Intelligenz und umfasst alle erfassten Daten, in unserem Falle alle Betriebsdaten der Fertigung. Damit gehören nicht nur numerische Messwerte, sondern auch andere Betriebsdaten wie z. B. Ausschussmeldungen zu den Sensordaten. Sensordaten können zunächst mit technischen Sensoren im Fertigungssystem erfasst und dann als Daten an ein Modul eines Berechnungsagenten weitergegeben werden. Das Modul des Berechnungsagenten kann im Rahmen dieser Anmeldung im Sinne eines Systems der künstlichen Intelligenz auch als Sensor bezeichnet werden. Sensordaten können damit numerische Werte und diskrete Werte umfassen. Der Begriff Prozessdaten oder Prozesswerte stammt aus der Qualitätskontrolltheorie oder der Theorie von SIX SIGMA und umfasst die numerischen Sensordaten, die für die Analyse von Fehlern relevant sind. Der Begriff Messwerte stammt aus der Regelungstechnik und umfasst diejenigen Prozesswerte, die bei der numerischen Regelung einer Maschine verwendet werden. In der Kunststoffverarbeitung stimmt der Begriff also mit dem Begriff Maschinenwerte überein. Es gibt also mehr Prozesswerte als Messwerte. Als Messwerte einer Regelung kommen nur diejenigen Prozesswerte in Frage, für die eine Übertragungsfunktion oder eine Gewichtsfunktion bekannt ist oder berechenbar ist. Das ist lange nicht bei allen Prozesswerten der Fall. In der hier beschriebenen Erfindung wollen wir darlegen wie auch qualitätsrelevante Prozessdaten, die keine Messwerte einer numerischen Regelung sind, genutzt werden können.

Der Begriff Regelung wird in einem erweiterten Sinne interpretiert. Jan Lunze definiert im Buch "Regelungstechnik 1, 10 Auflage, Springer Vieweg Verlag" auf Seite 1:

"Die Regelungstechnik befasst sich mit der Aufgabe, einen sich zeitlich verändernden Prozess von außen so zu beeinflussen, dass dieser Prozess in einer vorgegebenen Weise abläuft".

Wenn wir also einer Spritzgießmaschine vorgeben wollen, außer beim Anfahren nur gute Teile zu produzieren, gehört dies zur Regelungstechnik.

Auf Seite 3 schreibt Jan Lunze:

"Prinzipielle Wirkweise der Regelung. Jede Regelung beinhaltet 3 wichtige Schritte:

1. Messen. Die Regelgröße wird entweder direkt gemessen oder - wie bei nicht messbaren Regelgrößen z.B. Qualitätswerten - aus anderen Messgrößen berechnet.
2. Vergleichen. Der Wert der Regelgröße wird mit dem Wert der Führungsgröße verglichen. Die Differenz zwischen beiden Größen ist die Regelabweichung.
3. Stellen. Aus der Regelabweichung wird unter Berücksichtigung der dynamischen Eigenschaften der Regelstrecke die Stellgröße bestimmt."

Implizit unterstellt hier Jan Lunze, dass sowohl die Regelgröße als auch die Führungsgröße numerisch sind. Wir erweitern diese Aufgabenstellung nun so, dass die gemessene Größe auch diskret sein kann. Das Ergebnis des Messens z.B. an einer Maschine sind also nicht nur Drücke, Temperaturen oder Maschinenwerte, sondern auch die Information, ob die Messung fehlerfrei ist, oder ein Fehler nach Grund aufgetreten ist. Wir vergleichen nicht nur die gemessenen Maschinengrößen mit den Führungsgrößen, sondern auch die restlichen Prozesswerte mit den mittleren Prozesswerten, und wir vergleichen, ob ein Fehler aufgetreten ist. Das ist ein Vergleich der rückgemeldeten Qualitätsinformation mit der Vorgabe, dass kein Fehler auftreten soll. Ist kein Fehler aufgetreten, so kann die Fertigung wie üblich weiterlaufen. Bei einer numerischen Regelung bleibt die Führungsgröße bestehen und es wird eine Stellgröße errechnet. Ist jedoch ein Fehler durch das Wirken von Störgrößen aufgetreten, so muss die Führungsgröße so angepasst werden, dass der Fehler nicht wieder auftritt. Dies kann dann geschehen, wenn die Störgrößen zu messbaren Abweichungen der Prozesswerte führen und wir auf diese Art und Weise erkennen können, wie wir den Störgrößen entgegenwirken können, und wenn Simulationen zur Bestimmung der Führungsgrößen möglich sind.

Diese neue Art der Regelung hat die gleiche prinzipielle Wirkweise wie die bekannte Regelung, ist jedoch so verallgemeinert, dass sie viele Fehler selbsttätig beseitigen kann.

Der Begriff "Klassifikation" dient zur Zuordnung der Messwerte in Klassen. Die Klassen können in einer Definitionsphase bestimmt werden. Vorzugweise sind die Klassen als die Fehlerklassen vordefiniert. Dabei hat man normalerweise die Klasse "Gut" und für jeden Fehler nach Grund eine eigene Klasse. Wenn man die Qualität untersucht, dann bedeutet Fehler nach Grund Ausschuss nach Grund, also z.B. "Artikel nicht voll", "Schlieren", "Einfallstelle", "Blase",... Wir haben also üblicherweise eine endliche Menge diskreter Klassen, die durch einen Text beschrieben sind. Manchmal kann ein Fehler auch entstehen, indem ein numerischer Wert einen Grenzwert übersteigt, z.B. beim Automotor $NOx > 600$.

Ein SOLL-Prozesspunkt kennzeichnet sich als eine Menge von Prozesswerten, bei deren Anwendung fehlerfrei produziert werden kann. Der SOLL-Prozesspunkt (es kann auch eine Menge von SOLL-Prozesspunkten ermittelt werden, der Einfachheit halber wird der Begriff meist nur in der Singularform verwendet) dient als Eingangsgröße zur weiteren Berechnung des Einstelldatensatzes. SOLL-Prozesspunkte kennt man z.B. aus der Logistik und der Kunststoffverarbeitung. Fertigungsaufträge erhalten Solltermine, wenn diese in der Vorfertigung eingehalten werden, so kann rechtzeitig montiert werden. An Spritzgießmaschinen überwacht man bei Hochqualitätsteilen die Werkzeuginnendruckkurve als SOLL-Prozesspunkt.

Der Einstelldatensatz umfasst mehrere Einstellparameter. Die Einstellparameter dienen als Führungsgrößen oder Sollwerte der numerischen Regelung. Der Einstelldatensatz wird durch Ausführen eines Simulationsverfahrens automatisch errechnet. Die Einstellparameter können beispielsweise betreffen: Die Schneckendrehzahl, Temperatur einer Heizspirale oder Einspritzgeschwindigkeit. Die Einstellparameter dienen zur Regelung der Fertigungsmaschine während deren Betrieb. Im Unterschied zu bisherigen Verfahren werden die mittels eines Simulationsbausteins errechneten Einstelldaten nicht zur Konstruktion des Werkzeugs verwendet, sondern zur fehlerfreien Regelung der Fertigungsmaschine. Bei einer logistischen Anwendung werden die Einstellparameter Stellgrößen genannt und umfassen die kapazitätsrelevanten Daten, wie Schichtkalender und Personaleinteilung.

Die Einstelldaten einer Fertigungsmaschine dienen als Führungsgrößen für die numerische Regelung der Fertigungsmaschine und können bei Vorhandensein einer Hostschnittstelle vom Computer in die Steuerung der Maschine geladen werden.

Die Simulation wird vorzugsweise computer-implementiert und vollautomatisch ausgeführt. Dabei werden Versuchspläne mit wahrscheinlichen Führungsgrößen erstellt und in einem Simulationsmodell zugehörige Prozesswerte errechnet. Diese können nun mit dem vorher errechneten SOLL-Prozesspunkt verglichen werden. Nach der Regel "steepest ascent" können die Führungsgrößen solange schrittweise verbessert werden, bis die errechneten zugehörigen Prozesspunkte nahe dem errechneten SOLL-Prozesspunkt befindet. Danach kann ggf. mit aus RSM (response surface methodology) bekannten Methoden eine optimale Führungsgröße errechnet werden.

In einer vorteilhaften Weiterbildung der Erfindung wird ein Werkzeuginnendruck als IST-Sensordatum erfasst.

Gemäß einer alternativen, vorteilhaften Ausführung der Erfindung umfasst das Fertigungssystem eine Regelung eines Materialflusses, wobei produzierte Mengen an Maschinen, Arbeitsstationen und/oder während eines Transportes erfasst werden und wobei der Materialfluss durch seine Stellgrößen, Laufzeiten an Arbeitsplätzen und eine Zuordnung von Ressourcen geregelt wird.

In einer weiteren, vorteilhaften Ausführung der Erfindung wird zur Klassifikation der Sensordaten ein Scheduling-Algorithmus mit kombinierten Dekompositionsverfahren angewendet. Ein Dekompositionsverfahren ist ein algorithmisch-mathematischer Ansatz, mit dem ein globales Problem in mehrere, unabhängigeTeilprobleme zerlegt und dann gelöst werden kann. Ein Dekompositionsverfahren kann erfindungsgemäß im Rahmen der Planung z.B. zur Maschinendekomposition, Auftragsdekomposition, Zeitdekomposition und zur Rüstdekomposition angewendet werden.

In einer weiteren, vorteilhaften Ausführung der Erfindung werden bei dem Bestimmen des Einstelldatensatzes auch Störgrößen des Fertigungssystems verrechnet.

In einer weiteren, vorteilhaften Ausführung der Erfindung werden zur fehlerfreien Regelung des Fertigungssystems Ausschussgründe erfasst, die zur Klassifikation der Prozessdaten verarbeitet werden.

In einer weiteren, vorteilhaften Ausführung der Erfindung wird zur Optimierung der Simulation ein auf einer Response-Surface-Methode (RSM) basierter Algorithmus verwendet.

Gemäß einer alternativen, vorteilhaften Ausführung der Erfindung wird zur Klassifikation ein Support-Vector-Machines (SVM)-Verfahren verwendet.

Vorstehend wurde die Erfindung anhand der verfahrensgemäßen Aufgabenlösung beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Berechnungseinheit, einen Klassifikationsagenten oder auf ein Regelungssystem gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch elektronische Hardware-Module oder Mikroprozessor-Module, des Systems bzw. der Vorrichtung ausgebildet und umgekehrt.

In einer weiteren, vorteilhaften Ausführung der Erfindung umfasst das Fertigungssystem mehrere Komponenten, die numerisch geregelt sind, und eine übergeordnete diskrete Regelung, die den numerischen Regelungen Führungsgrößen vorgibt.

Insbesondere können die Sensordaten für die Komponenten einer übergeordneten diskreten Regelung übergeben werden. Die übergeordnete diskrete Regelung generiert dann Führungsgrößen für die numerische Regelung der Komponenten. Die diskrete Regelung kann deshalb als Führungsgrößengenerator fungieren. Dabei können auch Fehler erfasst und den numerischen Regelungen der Komponenten entsprechende Führungsgrößen übergeben werden.

Gemäß einem weiteren Aspekt betrifft die Erfindung ein Regelungssystem zur automatischen Regelung eines Fertigungssystems, umfassend:

- Ein System zum Erfassen von Sensordaten während des Betriebs des Fertigungssystems
- Einem Klassifikationsagenten, der zur Vorverarbeitung der erfassten Sensordaten zum Zwecke der Klassifikation der erfassten Prozessdaten ausgelegt ist, um SOLL-Prozesspunkte für einen fehlerfreien Betrieb des Fertigungssystems zu berechnen,
- Einer Berechnungseinheit, die zum Bestimmen eines Einstelldatensatzes als Führungsgröße des Fertigungssystems dient, wobei die Berechnungseinheit auf einen Simulationsbaustein zugreift, der zum Ausführen einer Simulation auf Basis der berechneten SOLL-Prozesspunkte bestimmt ist.

Gemäß einem weiteren Aspekt betrifft die Erfindung einen Klassifikationsagenten zur Verwendung in einem Regelungssystem, wie vorstehend beschrieben, der zur Vorverarbeitung der erfassten Sensordaten zum Zwecke der Klassifikation der erfassten Prozesswerte ausgelegt ist, um SOLL-Prozesspunkte für einen fehlerfreien Betrieb des Fertigungssystems zu berechnen.

Gemäß einem weiteren Aspekt betrifft die Erfindung eine Berechnungseinheit zur Verwendung in einem Regelungssystem, wie vorstehend beschrieben, die zum Bestimmen eines Einstelldatensatzes als Führungsgröße des Fertigungssystems dient, wobei die Berechnungseinheit auf einen Simulationsbaustein zugreift, der zum Ausführen einer Simulation auf Basis der berechneten SOLL-Prozesspunkte bestimmt ist.

Eine weitere Aufgabenlösung besteht in einem Computerprogrammprodukt für eine Fertigungsmaschine, das in einen Speicher eines Computers oder eines elektronischen Gerätes oder eines Steuerungsgerätes geladen oder ladbar ist mit einem Computerprogramm zur Durchführung des oben näher beschriebenen Verfahrens, wenn das Computerprogramm auf dem Computer oder dem Gerät ausgeführt wird. Das Computerprogrammprodukt kann in einen internen Speicher einer digitalen Berechnungseinheit geladen werden.

Eine weitere Aufgabenlösung sieht ein Computerprogramm vor zur Durchführung aller Verfahrensschritte des oben näher beschriebenen Verfahrens, wenn das Computerprogramm auf einem Computer, einem elektronischen oder digitalen Gerätes ausgeführt wird. Dabei ist es auch möglich, dass das Computerprogramm auf einem für den Computer oder das Gerät lesbaren Medium gespeichert ist. In einer vorteilhaften

Ausführungsform der Erfindung kann das Verfahren mittels eines Mustererkennungsverfahrens kombiniert mit einem Simulationsverfahren implementiert sein.

In der folgenden detaillierten Figurenbeschreibung werden nicht einschränkend zu verstehende Ausführungsbeispiele mit deren Merkmalen und weiteren Vorteilen anhand der Zeichnung besprochen.

KURZE BESCHREIBUNG DER FIGUREN

Fig. 1      zeigt eine schematische Darstellung zur Regelung einer Spritzgießmaschine gemäß einer bevorzugten Ausführungsform der Erfindung.
Fig. 2      ist eine schematische Darstellung eines diskreten Reglers.
Fig. 3      ist eine grafische Darstellung einer SVM-Klassifikation.
Fig. 4      zeigt eine beispielhafte Darstellung am Beispiel einer Motorsteuerung.
Fig. 5      stellt eine beispielhafte Darstellung für eine Bildschirmmaske zum Erfassen von Ausschuss nach Grund dar.
Fig. 6      zeigt eine beispielhafte Darstellung einer Werkzeuginnendruckkurve.
Fig. 7      ist eine beispielhafte Darstellung eines Six Sigma Verfahrens.
Fig. 8      ist eine weitere, beispielhafte Darstellung eines Six Sigma Verfahrens mit einem eingegrenzten Verarbeitungsfenster.
Fig. 9      zeigt ein Kurvendiagramm zum Ausschussgrund "Einfallstelle".
Fig. 10     ist ein Diagramm einer Z-Transformierten von Ausschussteilen mit zugehörigen Gewicht.
Fig. 11     ist ein Beispielbild einer Moldflow-Simulation.
Fig. 12     zeigt ein Beispiel für eine typische Fertigungsstruktur,
Fig. 13     ist ein Balkendiagramm am Beispiel einer Werkstattsteuerung.
Fig. 14     ist eine Darstellung einer Durchlaufzeitoptimierung und eines Scheduling am Beispiel für Maschine 2.
Fig. 15     ist eine Schemazeichnung einer Spritzgießmaschine.

DETAILLIERTE BESCHREIBUNG DER AUSFÜHRUNGSBEISPIELE UND FIGUREN

Im Folgenden wird die Erfindung anhand von Ausführungsbeispielen im Zusammenhang mit den Figuren näher beschrieben. Die Erfindung zielt darauf ab, cyber-physische Systeme (Fertigungsstraßen, Spritzgießsysteme, logistische Systeme oder andere technische Systeme) zu regeln und ihnen einen fehlerfreien Betrieb zu ermöglichen.

Dies gelingt bei ausreichender Messung der Prozesswerte durch eine auf Klassifikation basierenden Erklärung und durch einen auf Simulationsergebnissen basierenden Verbesserungsvorgang zur Einstellung der Aktuatoren.

Gemäß einem Aspekt betrifft die Erfindung ein Verfahren zur fehlerfreien Regelung eines simulierbaren, cyber-physischen oder technischen Systems, bei dem die Umgebung durch Sensoren wahrgenommen wird und Aktuatoren Aktionen zur Regelung des Systems auslösen können. Wesentliche Anwendungen sind die fehlerfreie Regelung einer Fertigungsmaschine (z. B. Spritzgießmaschine) und die fehlerfreie Regelung des Materialflusses eines Produktionssystems eines Fertigungsunternehmens.

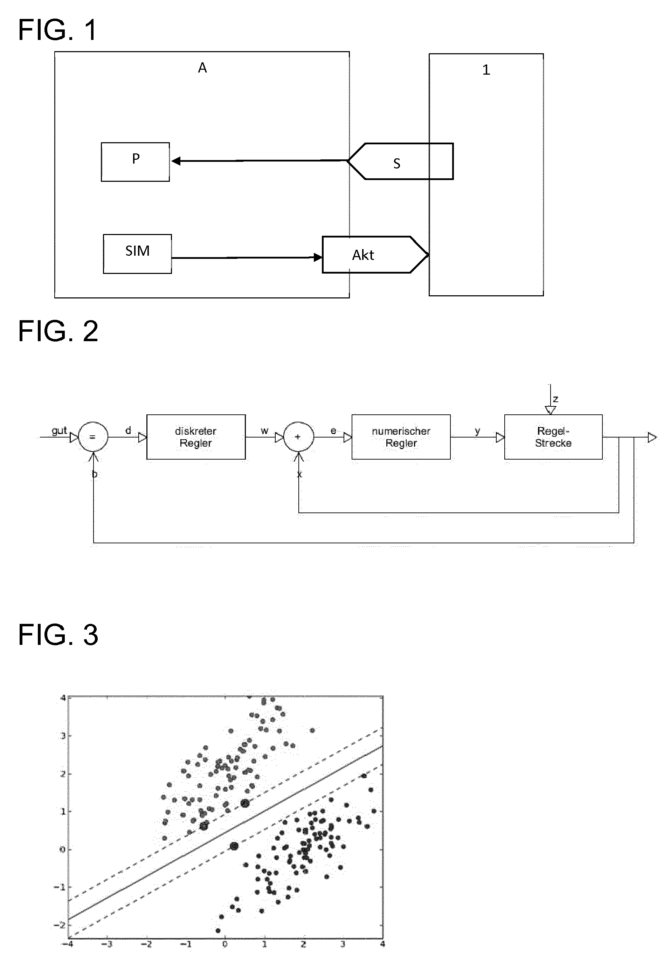

Dieser grundsätzliche Regelungskontext ist in **Fig. 1** auf schematische Weise repräsentiert.

Ein Klassifikationsagent A umfasst in der in Fig. 1 dargestellten Ausführungsform der Erfindung eine Berechnungseinheit P, die als Computer, als computer-basiertes Netzwerk oder Mikroprozessor ausgebildet sein kann und einen Simulationsbaustein SIM. Als Eingangsgrößen werden IST-Sensordaten von einem Sensorsystem S erfasst, das auf dem Fertigungssystem ausgebildet ist und typischerweise eine Vielzahl von unterschiedlichen Sensoren umfasst. Diese werden einer Eingangsschnittstelle weitergereicht, die in dem in Fig. 1 dargestellten Beispiel in dem Klassifikationsagenten A angeordnet ist und die ebenfalls als Sensor im Sinne eines Systems der künstlichen Intelligenz bezeichnet werden kann.

Bei dem Fertigungssystem 1 handelt es sich beispielsweise um eine Spritzgießmaschine.

Von dem Simulator (Simulationsbaustein) SIM oder von der Berechnungseinheit P werden Einstelldatensätze erzeugt, die dann per Hostschnittstelle (=Aktuator Akt) zur Spritzgießmaschine heruntergeladen werden und können über eine Ausgangsschnittstelle des Klassifikationsagenten A angesprochen werden.

In einer alternativen Ausführungsform der Erfindung können der Klassifikationsagent A, die Berechnungseinheit P und der Simulationsbaustein SIM auch als getrennte Module ausgebildet sein. Alternativ können diese zu einer übergeordneten Einheit zusammengefasst werden. Es ist auch möglich, dass der Simulationsbaustein SIM und/oder der Klassifikationsagent A jeweils Bestandteil der Berechnungseinheit P sind. In diesem Fall dient der Klassifikationsagent A zur Klassifikation der erfassten Sensordaten, um diese der Berechnungseinheit P zur weiteren Berechnung weiterzuleiten.

Die Erfindung betrifft also im Grunde die Lösung der Industrie 4.0 Probleme 1 und 2 für die diskrete Fertigung und die Semiprozessfertigung. Die Teile brauchen allerdings keineswegs eine eigene Intelligenz oder eine eigene IP-Adresse. Die Intelligenz liegt in der Regelung, nicht im Teil. Die Regelung ist ein wesentlicher Vorteil der erfindungsgemäß Lösung, da sie auf bisherige System in unveränderter Form angewendet werden kann, ohne, dass die Teile digitalisiert werden müssen.

Ein cyber-physisches System, engl. "cyber-physical system" (CPS), bezeichnet den Verbund informatischer, softwaretechnischer Komponenten mit mechanischen und elektronischen Teilen, die über eine Dateninfrastruktur, wie z. B. das Internet oder ein internes Intranet oder andere Netzwerke, kommunizieren.

Im Folgenden werden die mechanischen, elektronischen, physikalischen und/oder elektrischen Teile vereinfacht als Komponenten bezeichnet. Die beiden Standardbeispiele für cyber-physische Systeme in diesem Anmeldetext sind:

- Eine Spritzgießmaschine, die z.B. mit einem RFID-Drucker ausgebildet sein kann und einem mit der Maschine vernetzten Tablett, in dem Ausschuss deklariert werden kann.

- Eine Fertigung mit Montagelinie und Vorfertigungswerkstätten, die die Montagelinie so beliefern müssen, dass kein Bandstillstand entsteht.

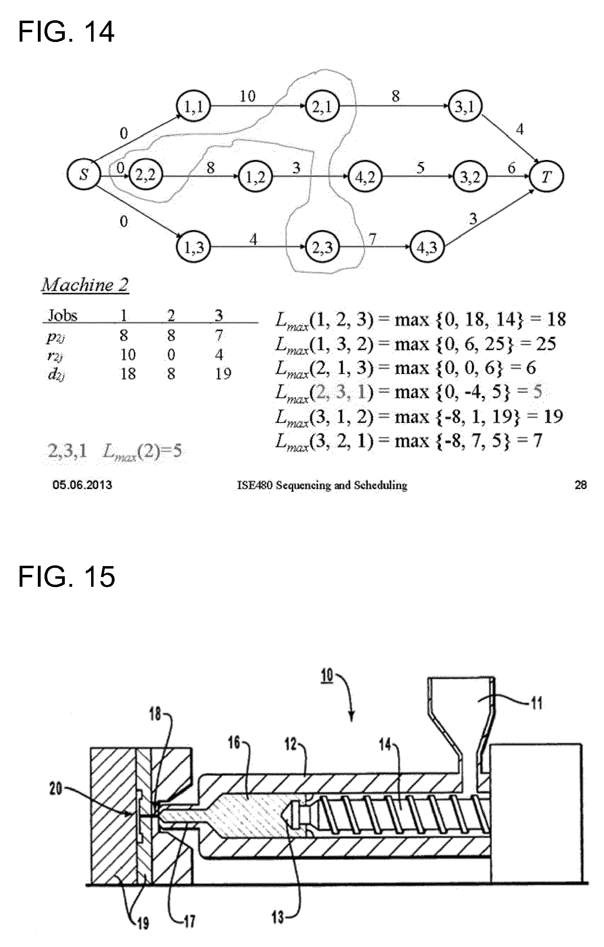

Im Folgenden wird die Erfindung für das Beispiel einer Spritzgießmaschinen-Regelung beschrieben. Eine Spritzgießmaschine 10 ist schematisch in **Fig. 15** in einer Seitenansicht dargestellt. Ein Trichter 11 dient zur Aufnahme von Kunststoff Rohmaterial in Form von Pellets, der auf einer Zylinderkammer 12 montiert ist. Diese umfasst einen konzentrischen Kolben 13 und eine Schnecke 14. Das geschmolzene Kunststoff-Rohmaterial wird in einen vorderen Teil der Zylinderkammer 12, zwischen Kolben 13 und Maschinendüse 17, gedrückt. Die Düse 17 ist mit einem Formhohlraum 20 mittels Anguss, Angussverteilern und Anschnitten verbunden. Die Spritzgießmaschine ist an einer Formwerkzeugstruktur befestigt. Je nach Form des Werkzeuges können unterschiedliche Formteile erzeugt werden.

In der Elektrotechnik und im Maschinenbau hat sich die Regelungstechnik durchgesetzt. Die hier vorgeschlagene Lösung betrifft eine verallgemeinerte Regelung, die auch in cyber-physischen Systemen einsetzbar ist.

Da hier nur numerische Werte zugelassen sind, wird diese Art der Regelung im Folgenden "numerische Regelung" genannt. Dieser Sachverhalt ist in **Fig. 2** dargestellt.

Eine Maschine soll so geregelt werden, dass sie nur gute Teile produziert. Die klassische Regelungstechnik ist von dieser Aufgabe überfordert, denn die Regelungstechnik basiert auf:

- Differentialrechnung

- Integralrechnung

- Lösen von (Differential-) Gleichungen.

Eine Fehlermeldung "Das Teil hat eine Einfallstelle" muss nämlich erst durch eine Vorverarbeitung und durch einen Führungsgrößengenerator in numerische Werte verwandelt werden, damit die klassische Regelungstechnik anwendbar wird.

Bei der vorstehend genannten Problemstellung haben wir zusätzlich eine Übertragungsfunktion mit einer endlichen Menge von Ausgangsgrößen, nämlich "Gut" oder "Ausschuss nach Grund".

Damit wird es notwendig, eine verallgemeinerte Lösung für eine Problemstellung zu finden, bei der sehr viele Eingangswerte in einem komplexen System so verarbeitet werden müssen, dass sie im Wesentlichen in sehr wenige Klassen klassifiziert werden können. Dazu können erfindungsgemäß hochwertige Mustererkennungsverfahren eingesetzt werden, deren Modell auf der biologisch-physiologischen Informationsverarbeitung des Menschen mit einer Großhirnrinde aus mustererkennendem Gewebe basiert, um diskrete Objekte schnell und sicher zu erkennen und Aktionen erzeugen sowie numerisch regeln zu können.

Um von den Fehlermeldungen zu numerischen Werten zu kommen, müssen die (sehr umfangreichen) Eingangsdaten (z.B. Sensordaten) vorverarbeitet werden. Dies kann über ein Klassifikationsverfahren, wie z.B. SVM (support vector machines), umgesetzt werden.

Ein Ergebnis einer SVM-Klassifikation ist beispielhaft in **Fig.3** dargestellt. Die Daten werden in zwei Klassen klassifiziert.

Unter einer Klassifikation der Menge X in die diskreten Klassen G verstehen wir einen Computer-basierten Prädiktor

$$g : X \rightarrow G$$

der den Eingaberaum X in die Menge diskreter Regionen von G aufteilt. Bei unserer Problemstellung unterstellen wir immer, dass es eine ausgezeichnete Klasse gibt, die wir mit "gut" bezeichnen.

Zu den Klassifikationsverfahren gehören insbesondere die Verfahren des statistical learning, wie z.B. SVM, aber auch das nachstehend beschriebene Klassifikationsverfahren für Kleinteile.

Die menschliche Informationsverarbeitung ist keine Selbstverständlichkeit, denn neuronale Netze geben nicht genug Information ab, um eine Senkrechte zur Grenzfläche zu errechnen. Unser Gehirn kann das und hochwertige Verfahren wie SVM können das ebenso. Die Klassifikation spielt also die Rolle einer verallgemeinerten Ortskarte. Eine Erklärung

$$\text{explain} : X \rightarrow X$$

ist eine Zuordnung, die jedem Punkt von X einen zugehörigen ausreichend guten Punkt zuordnet. Die Punkt nennen wir SOLL-Prozesspunkt. Den Differenzvektor

$$\mathbf{V}_{\text{explain}} = (\text{explain}(x) - x) / \| (\text{explain}(x) - x) \|$$

bzw. den zugehörigen Vektor der Länge 1 nennen wir Explainvektor. Wie in DE 102012104885 A1 beschrieben, läßt sich in Wechelfliessfertigungen ein fehlerfreier SOLL-prozesspunkt durch

$$\mathbf{Y}_{\text{soll}} := \mathbf{Y}_{\text{ist}} + (\sigma_{\text{soll}} - \sigma_{\text{ist}}) \, \mathbf{V}_{\text{explain}}$$

errechnen. Dabei bedeutet:

$\mathbf{Y}_{\text{soll}}$      SOLL-Prozesspunkt

$\mathbf{Y}_{\text{ist}}$      mittlerer Prozesspunkt

$\sigma_{\text{soll}}$      SIX SIGMA Vorgabe

Die Aufgabenstellung ist nun, zu dem vorgegebenen SOLL-Prozesspunkt $\mathbf{Y}_{\text{soll}}$ einen zugehörigen Einstellda-tensatz zu finden. Im allgemeinen Fall ist das nicht möglich. Deshalb muss man einen möglichst passenden Einstelldatensatz durch Versuche ermitteln.

Sei E die Menge der möglichen Einstelldatensätze zu X. Eine Simulation

$$\text{sim} : E \rightarrow X$$

errechnet virtuell, welche Prozesspunkte zu einem Einstelldatensatz gehören. Wir nennen eine Komponente oder ein cyber-physisches System simulierbar, wenn eine solche Simulationsfunktion berechenbar ist. Die Simulationsfunktion kann in einer vorteilhaften Ausführungsform der Erfindung in einem Simulator bzw. in einem Simulationsbaustein ausgeführt werden. Der Simulator ist ein Hardwarebauteil, in dem die Simulationsfunktion in Silizium (in silicio) implementiert ist. Im ersten Beispiel einer Spritzgießmaschinen wird die Fluss-Simulation durch Moldflow genauer besprochen.

Eine Verbesserung durch Simulation sucht zu einem verbesserten Prozesspunkt x einen möglichst guten Einstelldatensatz e ∈ E. das heißt:

$$\text{improve} : X \rightarrow E$$

so dass

$$\| \text{sim}( \text{improve}(x) ) - x \| = \inf \{ \| \text{sim}(e) - x \| \; | \; e \in E \}$$

Der Agent übergibt also an die unterliegende numerische Regelung die Führungsgröße improve( explain (x))

wenn die Sensoren vorher den fehlerhaften Prozesswert x gemessen hatten.

Wenn eine Simulationsfunktion existiert, so kann die response surface methodolgy (RSM) virtuell im Rechner angewendet werden, um "*improve*" zu errechnen. Dabei ist zu beachten, dass RSM davon ausgeht, dass die Wahrscheinlichkeit, wo das Optimum zu finden ist, nicht bekannt ist. In manchen Fällen, wie zum Beispiel den logistischen Fragen, ergibt sich aus der Fragestellung eine Vorkenntnis, die zu schnelleren Lösungsverfahren als RSM, führt. Dies wird erfindungsgemäß umgesetzt bzw. diese Vorkenntnis wird verrechnet, indem sich die Versuchspläne auf wahrscheinliche Stellgrößen beschränken.

Im Folgenden wir die Erfindung am Beispiel einer fehlerfreien Regelung einer Fertigungsmaschine beschrieben.

Eine Fertigungsmaschine besitzt ein Verarbeitungsfenster, bei dem gute Teile produziert werden, wenn dieses einen ausreichenden Abstand zur begrenzenden Hyperebene besitzt (siehe auch DE 102012104885 A1).

An solchen Fertigungsmaschinen können Störgrößen und verdeckte Parameter auftreten. Im Beispiel Spritzgießmaschinen besprechen wir den verdeckten Parameter Viskosität..

Im Folgenden wird dieser Sachverhalt am Beispiel einer Motorsteuerung beschrieben. Die spezifischen Informationen sind dem Buch "Wilhelm Kleppmann: Versuchsplanung, Produkte und Prozesse optimieren, 7. Auflage, Hanser Verlag" (Seite 290 - 294) entnommen. Es handelt sich um ein einfaches Beispiel an einem 4-Zylinder Otto Motor mit 2l Hubraum und 120 kW Leistung. Die Daten gelten nur für eine ausgewählte Last/Drehzahlsituation. Eine Randbedingung war, dass die Konzentration der Schadstoffe NOx und HC nicht höher als 600 ppm sind.

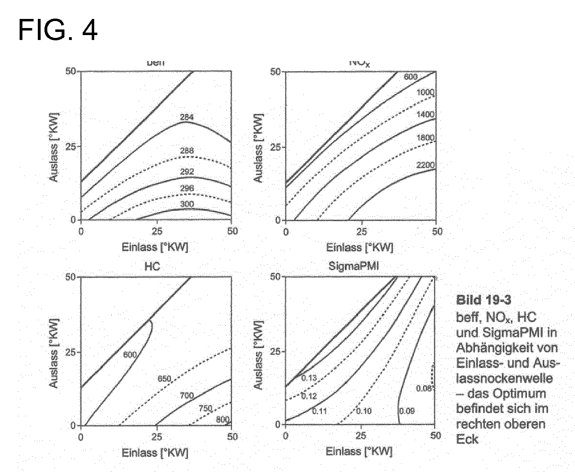

Das Beispiel zeigt deutlich die heute übliche Vorgehensweise, im Labor wird ein Versuchsplan erstellt, um die beste Motoreinstellung zu bestimmen. Dabei werden Störgrößen ignoriert. In **Fig. 4** sind die Ergebnisse zusammengestellt:

Zum gleichen Ergebnis kommt man mit der erfindungsgemäßen Lösung. Diese sieht eine andere Reihenfolge der Verarbeitungsschritte vor: Nämlich, erst die Grenzflächen zu 600 ppm zu bestimmen, danach den optimalen fehlerfreien SOLL-Prozesspunkt zu ermitteln und danach die zugehörigen Einstelldaten zu berechnen.

Im Steuergerät des Motors eines Automobils sind nun abhängig von Last, Drehzahl und Motortemperatur optimale Werte hinterlegt, nach denen nun der Motor gesteuert wird. Wenn man in jedem Motor eine Simulationsrechnung durchführen würde, käme exakt das Gleiche heraus. Der Unterschied ist nur, unser Verfahren beachtet prinzipiell auch Störgrößen. Damit ist die erfindungsgemäße Lösung wesentlich praxisnaher, da ein technisches System immer Störgrößen hat.

Im Folgenden wird das erfindungsgemäße Regelungsverfahren am Beispiel für ein fehlerfreies Spritzgießen erläutert.

Einige Grundlagen zum fehlerfreien Spritzgießen finden sich bereits in DE 102012104885 A1. Diese Schrift zeigt jedoch noch keine vollständige Lösung des Problems, da die Flusssimulation des Materials auf Basis der Geometriedaten des Werkzeugs fehlt und nicht berücksichtigt werden kann. Im Folgenden eine detaillierte Beschreibung.

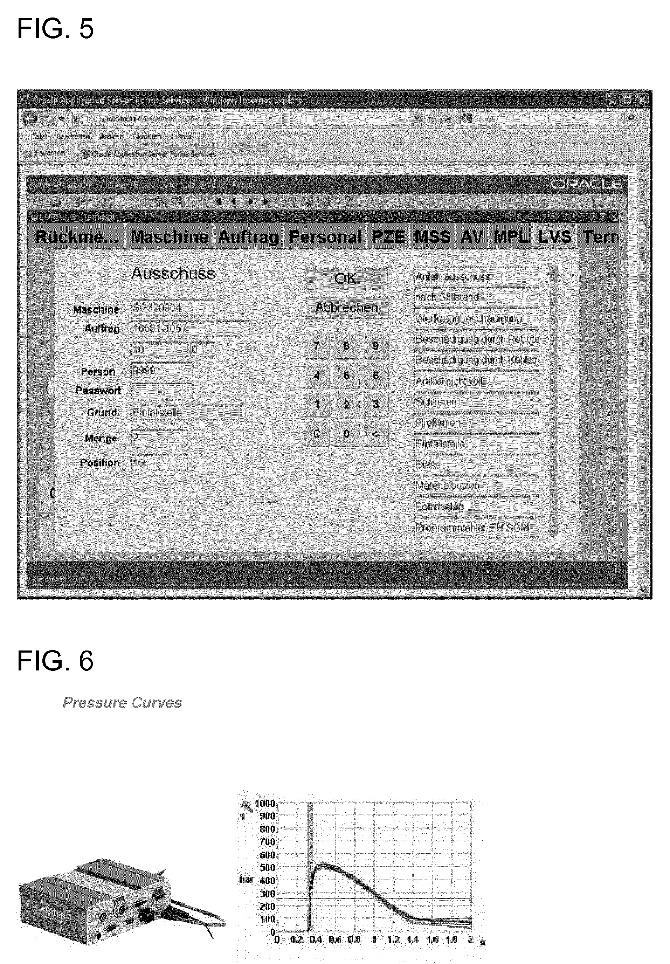

Als erstes wird der auftretende Ausschuss nach Grund erfasst. Eine Bildschirmoberfläche mit einer entsprechenden Maske dazu ist in **Fig.5** beispielhaft dargestellt.

Im konkreten Fall ist der Ausschussgrund eine Einfallstelle. An Fertigungsmaschinen werden Prozessdaten in Form von IST-Sensordaten erfasst. Dazu gehört auch eine Erfassung des Werkzeuginnendrucks. Dieser kann mit technischen Geräten erfasst werden und in Form einer Kurve mit einem Druckverlauf über die Zeit repräsentiert werden. Ein Beispiel dafür ist in **Fig. 6** dargestellt. Die IST-Sensordaten können mit im Stand der Technik bekannten Messgeräten erfasst werden.

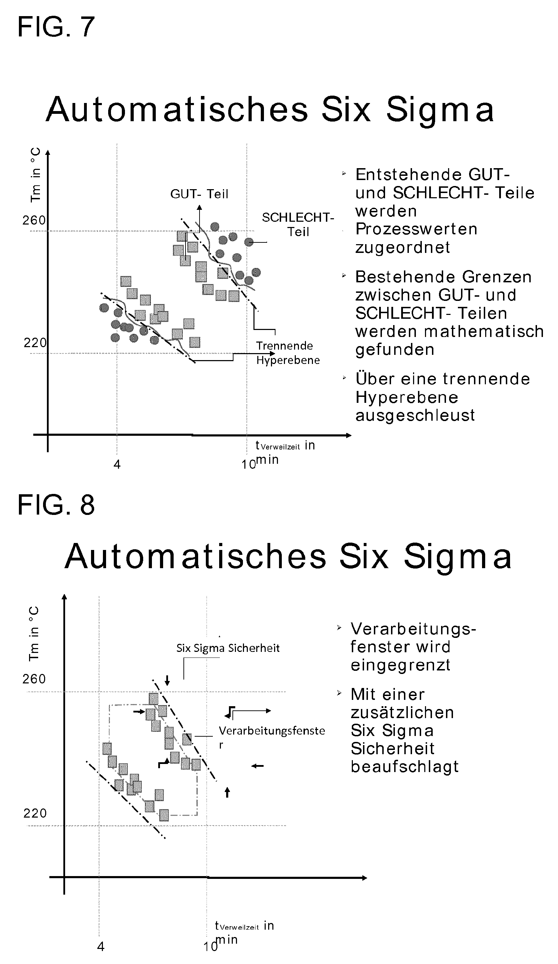

Durch Anwendung bzw. Ausführung eines automatischen Klassifikationsverfahrens werden gute und schlechte Teile getrennt. Ein solches Klassifikationsverfahren ist in **Fig. 7** dargestellt. Entstehende GUT- und SCHLECHT-Teile werden Prozesswerten zugeordnet. Bestehenden Grenzen zwischen GUT- und SCHLECHT Teilen werden mittels einer mathematischen Berechnung gewonnen und über eine trennende Hyperebene ausgeschleust.

Für jeden Kunststoff - außer PVC - existiert ein solches Prozessfenster. Die Y-Achse beschreibt die Temperatur in der Spritzgießmaschine. Die X-Achse beschreibt die Verweilzeit in der Maschine. Mit Hilfe einer Klassifikation (hier SVM) können Ausschuss und gute Teile getrennt werden.

Um sicher zu gehen, dass gute Teile produziert werden, muss man sich auf einen inneren Teil des Fensters beschränken, das Verarbeitungsfenster, das näher in Zusammenhang mit **Fig. 8** beschrieben und dargestellt wird.

Die Anmelderin hat eine Theorie der Kurvenklassifikation entwickelt und nachgewiesen, dass SVM in der Topologie des Funktionenraumes konvergiert. Damit wird es erstmal möglich, die Klassifikationen auch auf Werkzeuginnendruckkurven anzuwenden. Wie in Fig. 8 gezeigt, wird das Verarbeitungsfenster eingeschränkt und mit einer zusätzlichen Six Sigma Sicherheit beaufschlagt. Zu weiteren technischen Details zu dem SIX SIGMA Verfahren wird auf die DE 10 2010 037 552 A1 verwiesen, in der das Verfahren mathematisiert und automatisiert beschrieben ist.

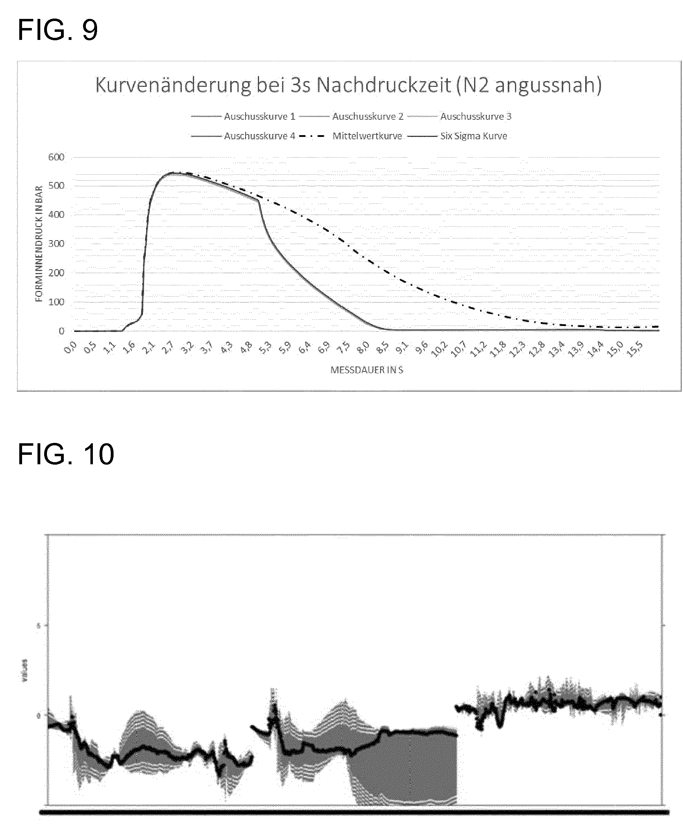

**Fig. 9** zeigt eine typische Kurve zum vorher genannten Ausschussgrund "Einfallstelle". Eine Einfallstelle ist im Spritzgießprozess von Kunststoffbauteilen eine Fehlerursache, die beim Abkühlen als Volumenkontraktion (Schwindung) auftritt. In Bereichen von Masseanhäufungen oder großen Wanddicken ist diese Volumenkontraktion der Schmelze erhöht, wobei das sich reduzierende Volumen nicht durch neue Schmelze ersetzt werden kann, da der Anschnittkanal schon erstarrt ist. Es werden somit Zugeigenspannungen im Inneren aufgebaut. Existiert eine hinreichend dicke Randschicht, können infolge der inneren Zugspannungen so genannte zentrale Lunker entstehen. Wenn jedoch die erstarrte Randschicht noch nicht stabil genug ist um der inneren Kontraktionsneigung entgegenzuwirken, wird die Oberfläche nach innen deformiert und Einfallstellen bzw. Vertiefungen an der Formteiloberfläche entstehen. Insbesondere an größeren Masseanhäufungen oder bei höheren Wandstärken treten diese Einfallstellen auf.

Einfallstellen treten auf, wenn der Nachdruck oder die Nachdruckzeit zu niedrig sind, wie im obigen Beispiel.

Bei Klassifikationen werden im allgemeinen Z-Transformationen verwendet.

**Fig. 10** zeigt ein Diagramm für die Z-Transformierte von Ausschussteilen mit zu geringem Gewicht. Im linken Bereich in Fig 10 ist der Druck angussnah, im mittleren Bereich ist der Druck angussfern und im rechten Bereich die Temperatur aufgetragen.

Wie aus Fig. 10 ersichtlich, liegt die transformierte Druckkurve deutlich unter 0. Der Druck muss also erhöht werden. Eine neue optimierte Druckkurve kann erfindungsgemäß mit SVM EXPLAIN errechnet werden. Wenn also x eine fehlerhafte Werkzeuginnendruckkurve ist, so ist explain(x) die durch EXPLAIN bestimmte korrigierte Werkzeuginnendruckkurve.

Die zugehörigen Einstelldatensätze zu bestimmen, ist beim Spritzgießen besonders aus 3 Gründen besonders schwierig:

1) Alle unterschiedlichen Werkzeuge benötigen aufgrund anderer Geometrie unterschiedliche Einstelldatensätze.

2) Unterschiedliche Materialien benötigen unterschiedliche Einstelldatensätze und bei den Materialien können wichtige Charakteristika, wie die Viskosität schwanken.

3) Es gibt erhebliche Störgrößen, denn die Regelung der Standardsteuerung basiert auf Maschinenwerten.

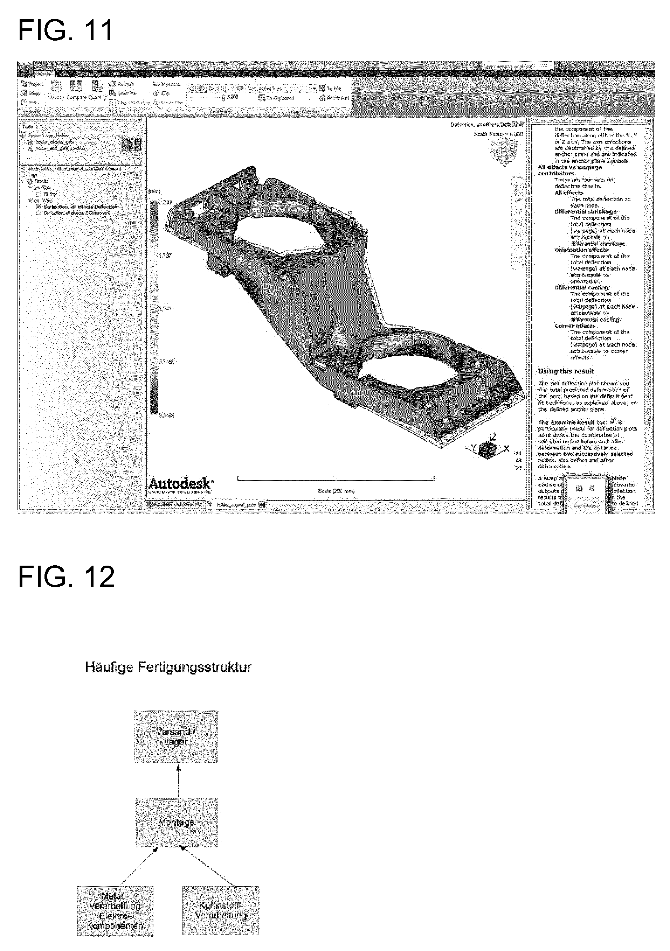

Um den Lösungsweg zu erläutern, wird auf **Fig. 11** mit einem Beispielbild einer Moldflow Simulation Bezug genommen. Bereits in den 90ger Jahren wurde Moldflow von Autodesk eingesetzt, um den Materialfluss zu simulieren, ein Endergebnis war eine errechnete Sollinnendruckkurve.

In der Patentschrift US 5,578,256 stellte Moldflow das Konzept vor, eine Spritzgießmaschine auf Basis der Differentialkurve einer an der Düse gemessenen Druckkurve zu steuern. Dabei werden aber weder Ausschussgründe, noch Störgrößen, noch im Werkzeug gemessene Prozesswerte, aus den ein SOLL-Prozesspunkt ermittelt wird, berücksichtigt. Diesen Nachteil überwindet die erfindungsgemäß vorgeschlagene Lösung. Bei dem erfindungsgemäßen Regelungsverfahren werden sowohl die Ausschussgründe als auch die Störgrößen bei der Regelung des Fertigungssystems berücksichtigt. Des Weiteren werden die im Werkzeug gemessene Prozesswerte verrechnet, also die numerischen Sensordaten, die für die Analyse von Fehlern/Ausschuss relevant sind. Damit kann die erfindungsgemäße Regelung zum einen automatisiert und zum anderen wesentlich besser an die realen, technischen Bedingungen angepasst ausgeführt werden.

Eine auf dem Werkzeuginnendruck basierende Regelung wurde in Michaeli, Gruber "Prozessführung beim Spritzgießen-direkte Regelung des Werkzeuginnendrucks steigert Reproduzierbarkeit" Zeitschrift Kunststofftechnik I 2005 1 vorgestellt. Dabei spielen aber Ausschussmeldungen und Simulationen keine Rolle, es wird nur auf numerische Effekte von Störgrößen reagiert.

Inzwischen wurde festgestellt, dass Ausschussgründe und Stellgrößen typischen Phasen des Spritzgießens zugeordnet werden können. Dies wurde in US 7,431,870 B2 ausgenutzt, um das Abmustern einer Spritzgießmaschine zu unterstützen. Die Abmusterung erfolgt aber immer noch manuell durch einen Einrichter, Störgrößen spielen noch keine Rolle.

Im Artikel Hopmann, Ressmann, Keuters "Betriebssystem der Produktion" Kunststoffe 3/2014 wurde ein Prozessfluss bis an die Maschine beschrieben. Dabei wird aber die Konstruktion noch nicht einbezogen und es wird noch kein Zusammenhang zwischen Ausschussmeldungen und Prozesswerten erzeugt.

Damit haben wir genug zusammengetragen, um die neue Regelung einer Spritzgießmaschine beschrieben zu können. Wenn Ausschussmeldungen auftreten, kombinieren wir diese Information mit den erfassten Prozessdaten und errechnen mit SVM (oder einem anderen Klassifikationsverfahren) eine verbesserte SOLL-Werkzeuginnendruckkurve, bei der dieser Ausschussgrund nicht mehr auftritt. Wir gehen davon aus, dass das Werkzeug mit Kistler-Sensoren für Innendruck und Innentemperatur angussnah und angussfern ausgestattet ist. Damit ist es möglich, den "hidden Parameter" Viskosität z.B. mit Hilfe des EM-Verfahrens vorherzusagen. Ein EM-Verfahren kann als Expectation-Maximization-Algorithmus aus der mathematischen Statistik implementiert sein. Die Kernidee des EM-Algorithmus ist es, mit einem zufällig gewählten Modell zu starten, und abwechselnd die Zuordnung der Daten zu den einzelnen Teilen des Modells (Expectation-Schritt) und die Parameter des Modells an die neueste Zuordnung (Maximization-Schritt) zu verbessern.

In beiden Schritten wird dabei die Qualität des Ergebnisses verbessert: Im E-Schritt werden die Punkte besser zugeordnet, im M-Schritt wird das Modell so verändert, dass es besser zu den Daten passt. Findet keine wesentliche Verbesserung mehr statt, beendet man das Verfahren. Das Verfahren dient zum Finden von "lokalen" Optima.

Als nächsten Schritt sollte die Simulation aufgrund der Geometrie-Daten kalibriert werden, so dass eine Rechnung aufgrund der jetzt bekannten IST-Materialdaten mit den Messungen des Werkzeuginnendrucks aufgrund der bestehenden Stellgrößen übereinstimmt. Das bildet die Basis, um die Stellgrößen per Simulation zu suchen, die zur SOLL-Werkzeuginnendruckkurve führen. Dabei braucht man keinen RSM-Versuchsplan, denn es ist ja schon bekannt, welche Stellgrößen welchen Teil der Werkzeuginnendruckkurve beeinflussen. Mit Hilfe einer optimierten Versuchsplanung für Simulationsversuche können wir nun einen verbesserten Einstelldatensatz bestimmen. Dieser kann nach Freigabe durch einen Einrichter automatisch per Hostschnittstelle zur Spritzgießmaschine heruntergeladen werden.

Dabei ist zu beachten, dass ein Ausschuss wegen Restfeuchte und Anfahren nicht zu vermeiden ist. Der hier beschriebene Klassifikationsagent A kann auch dazu verwendet werden, eine möglichst kostengünstige Produktion zu bestimmen. Für eine Verkürzung der Zykluszeit nimmt man eine gewisse Ausschussrate in Kauf und strebt das Kostenoptimum an.

Ein weiteres Anwendungsbeispiel des erfindungsgemäßen Verfahrens liegt in der Regelung eines fehlerfreien Materialflusses.

Die im Folgenden beschriebene Anwendung des Klassifikationsagenten A dient zur Steuerung des Materialflusses, bei der produzierte Mengen an Maschinen oder während der Transporte erfasst werden und der Materialfluss durch seine Einstelldatensätze bzw. Stellgrößen Laufzeit der Maschinen, bzw. Bereitstellung von Ressourcen und die Maschinenbelegung gesteuert wird. Diese Erfindung betrifft eine der größten Einsparungsreserven der Industrie.

Eine typische Fertigungsstruktur ist in **Fig. 12** dargestellt.

Bei solchen Fertigungsstrukturen sind meist große Einsparungen möglich, oftmals im Millionenbereich. Auf der einen Seite kommt es öfters zu verspäteten Lieferungen der Montage, weil eine der vorgelagerten Werkstätten das benötigte Material nicht rechtzeitig geliefert hat. Auf der anderen Seite treten hohe Zwischenlager zwischen Vorfertigung und Montage auf. Bei den heute im Stand der Technik bekannten Steuerungen für Fertigungssysteme treten Nachteile auf (zu hohe Zwischenlager, zu langsame Reaktion auf und/oder fehlende Anpassung an die Kundenwünsche).

Im Augenblick gibt es gibt es in Fabriken meist 4 Entscheidungsebenen im Materialfluss:

- In der Disposition werden die Losgrößen mit Hilfe eines ERP bestimmt.

- In der zentralen AV wird der Materialfluss, bzw. die Supply Chain gesteuert.

- Durch die Leiter der Werkstätten werden manuell die Stellgrößen (Einstelldaten) Laufzeit der Maschinen und Personalzahl bestimmt.

- In einem MES oder APS wird die Reihenfolge der Abarbeitung der Jobs festgelegt.

Die wissenschaftliche Theorie des "scheduling" blendet die Frage der Stellgrößenoptimierung aus, obwohl gerade diese einen dominanten Effekt hat. Wenn bei Engpässen die Kapazität nicht erhöht wird, kommt es zu verspäteten Kundenauslieferungen, oder Bandstillständen in Folgewerkstätten. Wenn umgekehrt die Kapazität zu hoch ist, kommt es zu ungenutzter Personalkapazität oder zu übergroßen Beständen.

Erfindungsgemäß wird hier eine Klassifikation durch den Scheduler ausgeführt. Der Klassifikationsagent A übernimmt in diesem Ausführungsbeispiel der Erfindung die Funktion eines Schedulers.

Für einen gegebenen Auftragsbestand gibt es typische Klassifizierungen:

- Auftragsbestand kann termingerecht ohne zu große Durchlaufzeit geliefert werden.

- Es treten Verspätungen auf.

- In einer Vorfertigung werden die Teile zu früh gefertigt -> Anstieg Durchlaufzeit.

Die richtige Klassifikation eines Auftragsbestandes erfolgt durch eine optimale Maschinenbelegung. Eine optimale Maschinenbelegung ist jedoch nicht berechenbar, man muss sich mit einer möglichst guten Näherung begnügen. Im Folgenden besprechen wir das Problem der optimalen Maschinenbelegung.

In vielen Bereichen der künstlichen Intelligenz hilft das Prinzip der Lokalisierung weiter, das gilt insbesondere für SVM, das hier eine große Rolle bei der Bestimmung der Einstelldatensätze (Stellgrößen) spielt. Die globalen Supportvektoren eines globalen SVM-Optimums setzen sich aus lokalen Supportvektoren lokaler Optima zusammen.

Das Prinzip der Lokalisierung heißt beim Scheduling Dekomposition (siehe Michael L. Pinedo: Scheduling , Theory, Algorithms and systems, Fourth edition Springer). Dabei gibt es mehrere Arten der Dekomposition:

- Maschinendekomposition: Die Jobs einer Gruppe werden zusammen verplant

- Auftragsdekomposition: Die Jobs eines Auftrags werden zusammen verplant.

- Zeitdekomposition: Die Jobs eines Zeitabschnitts werden zusammen verplant.

- Rüstdekomposition: Jobs, die eine rüstintensive Ressource nutzen, werden zusammen verplant.

Im Folgenden werden wird nun erklärt, wie man durch die Dekomposition der Scheduling-Probleme zu einer Verbindung mit der Stellgrößenoptimierung kommen kann.

Die Anzahl der Jobs wird immer mit n bezeichnet, m bedeutet die Anzahl der Maschinen; i bezieht sich immer auf eine Maschine, j auf einen Job. Das Paar (i,j) bedeutet, dass der Job j auf Maschine i gefertigt wird.

Processing time (pij) ist die Durchlaufzeit des Jobs j auf Maschine i.

Release date (rj) ist der früheste Beginntermin.

Due date (dj) ist der Fälligkeitstermin

Weight (wj) ist die Priorität eines Jobs.

Schedulingprobleme werden mit dem Trippel $\alpha \mid \beta \mid \gamma$ beschrieben und bedeutet Maschinenumgebung, Verarbeitungscharakteristik und Zielgröße.

Die $\alpha$ - Felder können folgende Werte annehmen:

(1) Bedeutet single machine

(Pm) bedeutet parallel machines

(Qm) bedeutet m geschwindigkeitsabhängige Maschinen

(Rm) bedeutet m Maschinen mit Refa-Sätzen, das heißt, einer Zuordnung, welche Maschinen erlaubt sind und mit welcher Geschwindigkeit sie mit welchen Job laufen.

(Fm) bedeutet flow job, oder Linie

(FFm) flexible flow Job (Werkstattfertigung mit Werkstattfolge)

(Jm) job shop

(FJc) flexible Job shop (Werkstattfertigung mit Arbeitsplan)

(Om) open shop

Die $\beta$ - Felder können folgende Werte annehmen:

(rj) release date (frühester Beginn)

(prmp) preemptions (Unterbrechen erlaubt)

(prec) precedence constraints (Reihenfolgeabhängigkeiten)

(sjk) setup times (reihenfolgeabhängige Rüstzeiten)

(frmls) job families (Rüstgruppen, z.B. gleiches Werkzeug)

(batch(b)) batch processing (mehrere Aufträge auf einer Maschine)

(brkdwn) breakdown (Berücksichtigung von Ausfallzeiten)

(Mj) Machine eligibility restrictions (z. B. Werkzeug-Maschinen-Zuordnungen)

(prmu) Permutations (feste Auftragssequenzen)

(block) Block (verkettete Maschinen)

(nwt) No wait (Maschine muss laufen)

Die $\gamma$ - Felder können folgende Werte annehmen:

(Cmax) Makespan (letzter Endtermin)

(Lmax) maximum lateness (größte Verspätung)

($\Sigma$ wj Cj) weighted Completion Time (gewichtete Durchlaufzeit)

($\Sigma$ wj Tj) weighted Tardines (gewichtete Verspätung in std)

($\Sigma$ wj Uj) weighted number of tardy jobs (Anzahl Verspätungen)

Im Folgenden soll das Problem der Werkstattsteuerung am Beispiel einer Spritzerei erklärt werden.

In einer Spritzerei hat man m sehr unterschiedliche parallele Maschinen. Damit ist der erste Wert (Rm). Mehrere Aufträge können ein und dasselbe Werkzeug nutzen, damit entstehen Rüstfamilien. Das Material kann zu Materialtypen zusammengefasst werden, die Farben zu Farbgruppen, der zweite Wert ist also (frmls). Aufträge haben unterschiedliche Wichtigkeit, zum Beispiel muss ein Automobilzulieferer seine Serienteile pünktlich liefern, bei Ersatzteilen ist eine Verspätung nicht so schlimm. Damit wird eine Spritzerei beschrieben durch:

$$(Rm) \mid (frmls) \mid ( \Sigma\ wj\ Tj )$$

Die meisten Probleme des Scheduling sind NP-schwer oder NP-vollständig und erlauben keine exakte Lösung. Das hat zur Definition der Schwachen $\varepsilon$-Näherung geführt, die aber eine so komplexe Definition hat, dass er hier weggelassen wird. Der Autor bewies nun folgenden Satz:

Satz:

Das Problem (Rm) | (frmls) | ($\Sigma$ wj Tj) hat eine schwache $\varepsilon$-Näherung quadratischer Komplexität.

Das Verfahren verwendet eine Kombination aus Zeitdekomposition und Rüstdekomposition. Das Verfahren ist robust gegen eine additive Erweiterung mit anderen oben genannten Zielgrößen.

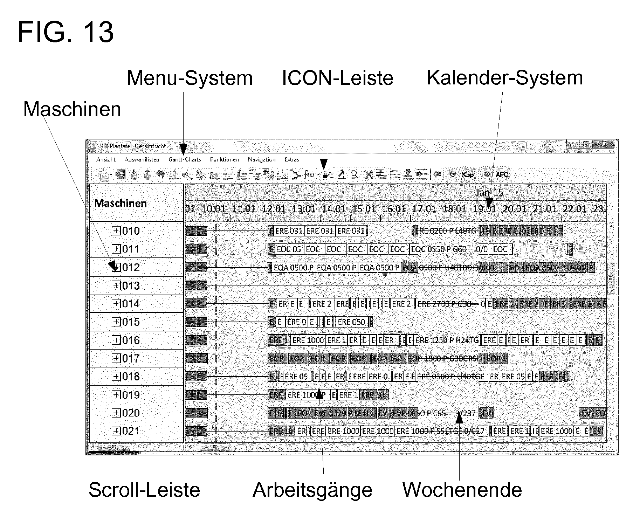

Eine graphische Repräsentation für eine Werkstattsteuerung ist ein Gantt-Chart oder Balkendiagramm, wie es aus dem Bereich der Projektplanung bekannt ist. Ein Beispiel ist in **Fig. 13** dargestellt.

Dabei werden Verspätungen und Rüstzeiten graphisch visualisiert. Die zentrale Materialflusssteuerung kann grob mit Hilfe der Maschinendekomposition und der Auftragsdisposition erfolgen. Diese sind z.B. in SAP APO realisiert.

Die Maschinendekomposition versteht man am Einfachsten mit dem Verfahren SBH (shifting bottleneck heuristic). SBH löst das Problem (Cmax) Makespan (letzter Endtermin) unter der Voraussetzung (Jm) job shop.

Wenn man ein solches Durchlaufzeitoptimierungsproblem lösen soll, so führt man eine Netzterminierung mit CPM durch und löst dann die Probleme der einzelnen Maschinen. Dies wir im Folgenden unter Bezugnahme auf **Fig. 14** näher erläutert.

Ein globales Durchlaufzeitproblem wird durch den Algorithmus umgesetzt in Probleme der Termineinhaltung der einzelnen Werkstätten. Wenn nun Verspätungen in den Werkstätten auftreten, muss global neu terminiert werden. Es erfolgt solange ein Resequenzierung, bis das Optimum erreicht ist.

Das Verfahren der Maschinendekomposition zeigt also ein ähnliches Zusammenspiel zwischen Werkstatt-Arbeitsvorbereitung und zentraler Arbeitsvorbereitung, wie es zwischen menschlichen Planern abläuft.

Der wesentliche Unterschied zwischen dem Verfahren und der realen Welt ist es, dass, wenn eine Zulieferung zu spät ist, wie in diesem Fall durch einen Engpass (bottleneck), dann muss die Kapazität des Engpasses erhöht werden, um die Verspätung zu vermeiden.

Hier landen wir jetzt bei dem Problem der Optimierung der logistischen Stellgrößen einer Produktion.

Erklärung der Fehler

Der vorher beschriebene Algorithmus weist auf die Erklärung der Fehler hin.

Engpass ist die Kapazitätsgruppe, die die größten Verspätungen hat; damit werden die Verspätungen durch nicht ausreichende Kapazität erklärt. Man findet aber nicht nur heraus, welche Kapazitätsgruppe der Engpass ist, sondern auch genau, wann der Engpass auftritt:

| Jobs | 1 | 2 | 3 |
|------|----|---|----|
| $p_{2j}$ | 8 | 8 | 7 |
| $r_{2j}$ | 10 | 0 | 4 |
| $d_{2j}$ | 18 | 8 | 19 |

Betrachten wir die vorher beschriebene Aufgabenstellung von Maschine 2 mit der oben beschriebenen Durchlaufzeit p, frühestem Beginn r und Fälligkeit d.

Standardmäßig wird 5 Tage die Woche gearbeitet, aber Samstags- und Sonntagsarbeit ist ebenso möglich.

Die optimale Belegung erklärt hier ihren Kapazitätsbedarf, in der 3. Woche muss am Wochenende gearbeitet werden, in der 2. Woche ebenso, in der ersten Woche reicht ein Tag.

Die Kapazität muss dann bereitgestellt werden, wenn die Aufträge sie brauchen.

Der Explain-Vektor ändert also den Zustand der Aufträge von verspätet zu rechtzeitig und erzeugt den Kapazitätsbedarf, der durch die Funktion improve gedeckt werden muss.

Das große Problem des Scheduling ist es, dass es so viele Alternativen gibt. Wenn man nun die Möglichkeit gibt, zusätzliche Kapazität hinzuzunehmen, so nimmt die Anzahl der Alternativen noch einmal drastisch zu.

Am Wochenende können 0 - 6 Schichten laufen, es gibt also 7 Alternativen. Bei 4 Wochen bedeutet das, die Anzahl der Möglichkeiten hat sich um den Faktor 2401 vervielfacht. Dieser Faktor muss aber mit der Anzahl der Maschinen potenziert werden.

Wenn man bei dieser hohen Anzahl von Alternativen nicht weiß, wo man suchen soll, so ist das Problem nicht berechenbar.

Zunächst soll einmal der Bezug zum Vorgängerbeispiel hergestellt werden. Das erste Bild des ersten Beispiels hat Temperatur und Verweilzeit eines Materials in einer Spritzgießmaschine beschrieben.

Verbessern durch Simulation

Das Stellgrößenoptimierungsverfahren RSM (response surface methodology) geht auf eine Veröffentlichung von Box und Wilson (1951) zurück. Danach wurde das Verfahren von Box und Draper (1987), Myers (1989) und Montgomery weiterentwickelt.

Es gibt heute eine extensive Nutzung des Verfahrens in der industriellen Welt. Eines der bekanntesten Beispiele ist die Motoroptimierung. Im Steuergerät von Diesel- und Ottomotoren moderner Kraftfahrzeuge sind, abhängig von Drehzahl, Last, Motortemperatur usw. optimale Werte für die Motorsteuerung hinterlegt.

Im Folgenden werden Stellgrößen, Response und die Optimierungsrechnung, als Einstelldatensatzelemente genauer betrachtet.

Die Stellgrößen der Planung sind Kapazitäten. Mit jeder Ressource ist ihre Anzahl verbunden; diese ist meist ganzzahlig (z. B. Gruppe A hat 5 Arbeitsplätze).

Anders als die Stellgrößen einer Maschine, die meistens eine einfache reelle Zahl ist, haben wir als zusätzliche Dimension noch den Kalender und die Verfügbarkeit. Aber auch diese Dimensionen können mit Versuchsplänen abgebildet werden. Wenn man also eine Kapazität erhöhen will, so hat man die Auswahl, die Anzahl der Schichten zu erhöhen, oder die Anzahl der Arbeitsplätze. In den Versuchsplänen für eine Stellgrößenoptimierung müssen beide Dimensionen abgebildet werden.

Eine Erhöhung der Anzahl der Arbeitsplätze erhöht die Kosten der Fertigung; eine Erhöhung der Schichten ebenso. Eine solche Erhöhung der Kosten ist nur gerechtfertigt, wenn die Folgekosten einer ausgebliebenen Kapazitätserhöhung größer sind, als die Kosten der Kapazitätserhöhung.

Nennen wir die Stellgrößen der Planung wieder x1,....xn.
Nennen wir die Kosten der Kapazitäten C(x1,...xn)

Demgegenüber stehen (siehe Abschnitt eigene Vorarbeiten)

$$\text{die Kosten der Maschinenbelegung} \quad B(x1....xn)$$

Wir sollen nun die Gesamtkosten minimieren, die Aufgabenstellung ist also

$$\text{Minimiere:} \quad y = C(x1,....xn) + B(x1,....xn)$$

Wobei x1,....xn die zulässigen Stellgrößen der Planung beschreibt.

Die Anmelderin hat ein RSM-Testprogramm geschrieben und auf eine immer steigende Anzahl von Maschinen angewendet. Die gemessene Komplexität lag bei ca. c * m * m, wobei c eine problemabhängige Konstante ist (ungefähr 5).

Nehmen wir nun an, dass eine Belegungsoptimierung 10 Sekunden dauert, so kommt man auf eine Rechenzeit von 5 * 100 * 100 * 10 Sekunden, also ca. eine Woche. Damit ist RSM als Verfahren, angewendet auf alle Maschinen, unbrauchbar.

Der Fehler des RSM-Ansatzes ist, dass die RSM-Versuchspläne optimal sind, wenn man keine Vorkenntnis hat, aber wir haben ja eine Vorkenntnis. Bei Maschinen, bei denen starke Verspätungen auftreten, wissen wir, dass die Kapazität erhöht werden muss, umgekehrt deuten belegungsfreie Zeiten auf einer Maschine auf Überkapazität hin.

Der explain-Vektor hat uns informiert, an welcher Stelle Kapazität benötigt wird. Im Beispiel gab es nur die Möglichkeit, mit Wochenendarbeit zu reagieren. Im allgemeinen Fall ist es jedoch zusätzlich möglich, die Anzahl der Arbeitsplätze zu erhöhen, oder die Laufzeit anderer vergleichbarer Maschinen zu erhöhen.

Somit muss eine Simulation der hier beschriebenen Alternativen durchgeführt werden, um näherungsweise optimale Stellgrößen zu finden. Der klassische RSM-Algorithmus muss dabei an unsere Vorkenntnisse angepasst werden, denn durch die vorige Belegungsrechnung können wir die Stellgrößen einteilen in

a) Stellgrößen, die sicher geändert werden müssen

b) Stellgrößen, die mit einer gewissen Wahrscheinlichkeit geändert werden müssen

c) Stellgrößen, die nicht geändert werden müssen.

Der zu verwendende Versuchsplan sollte also Stellgrößen, die nicht geändert werden müssen, außer Acht lassen und bei den anderen die Stellgrößen mit hoher Wahrscheinlichkeit bevorzugt in die Versuchspläne aufnehmen.

Ein Auftragsbestand mit 32 MT (Manntagen) soll auf 2 Maschinen m1 und m2 gelegt werden, die normal 5 Tage die Woche laufen. Rein aus Kapazitätsgründen reicht ein zusätzlicher Arbeitstag aus. Die Randbedingen, dass J1 nur auf m1 läuft und J2 nur auf m2 läuft, führt dazu, dass ein zusätzlicher Tag am Wochenende gefertigt werden muss.

Andere Anwendungen

Es gibt eine Vielzahl andere Anwendungen, zum Beispiel:

d) Lackieren von mit Tags versehenen Kunststoffteilen

e) SIX SIGMA Analysen mit automatischer Datenerfassung und Modell

f) Pressen von Elastomeren.

Fertigung von Kleinteilen

Eine schnelle und präzise Klassifikation setzt voraus, dass von jedem Teil bestimmt wird, ob das Teil gut ist oder Ausschuss aufgetreten ist und welche Prozessdaten dabei beteiligt waren.

Bei einer Serienfertigung von Kleinteilen ist eine solche Herstellungsmethodik viel zu teuer, hier gibt es 2 Möglichkeiten

a) Schichteinteilung

Der Ausschuss nach Grund wird schichtweise erfasst.

b) Chargenverfolgung

Die Transporteinheiten der Teile sind durch Tags gekennzeichnet und der Ausschuss nach Grund kann einer Charge zugeordnet werden.

Zur Vereinfachung sprechen wir von den Schichtmengen oder der Charge von einem Los.

Zu jedem Los kennen wir die Prozessdaten der Teile (mit leichter Ungenauigkeit) und die Anzahl der Ausschussteile nach Grund. Aus den Prozessdaten der Teile können wir einen Kennzahlenvektor erstellen. Für jeden Ausschussgrund erhalten wir damit eine Funktion

$$f : K \to R$$

wobei $f(k)$ die Anzahl der Ausschussteile ist.

Damit entsteht eine Prädiktionsaufgabe, aus Kennzahlenvektoren die Anzahl der Ausschussteile vorherzusagen, die Regression. Man benötigt eine erhebliche Menge von Kennzahlenvektoren, um verlässlich die Anzahl der Ausschussteile vorhersagen zu können.

Wenn man eine solche Regression hat, kann man wieder zur den ursprünglichen Prozessdaten zurückkehren und aus der Regression die Klassifikation errechnen, denn aus den Prozessdaten kann man mit Hilfe der Regression eine Ausschusswahrscheinlichkeit errechnen. Die Klassifikationsmethode nennen wir Kleinteilklassifikation.

Auch mit Hilfe der Kleinteilklassifikation kann man nun den neuen gesuchten SOLL-Prozesspunkt errechnen.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Es liegt somit z.B. ebenso im Rahmen der Erfindung neben der Fertigungsmaschine bzw. der Spritzgießmaschine andere technischen Systeme mit dem erfindungsgemäßen Verfahren zu regeln. Dabei kann es sich z.B. um logistischen Systeme oder um andere Produktionsanlagen handeln. Für einen Fachmann ist es insbesondere offensichtlich, dass die Erfindung nicht nur mit SVM als Klassifikationsalgorithmus angewendet werden kann, sondern auch mit anderen Klassifikationsverfahren.

Des Weiteren können die Bauteile des Regelungssystems auf mehrere physikalische Produkte (Klassifikationsagent, Berechnungseinheit, Prozessor etc.) verteilt realisiert werden.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Verfahren zur automatischen Regelung eines Fertigungssystems (1), umfassend folgende Verfahrensschritte:

   - Erfassen von Sensordaten während des Betriebs des Fertigungssystems (1)
   - Vorverarbeiten der erfassten Sensordaten zur Klassifikation der erfassten Prozessdaten, um SOLL-Prozesspunkte für einen fehlerfreien Betrieb des Fertigungssystems (1) zu berechnen,
   - Bestimmen eines Einstelldatensatzes als Führungsgröße für das Fertigungssystem (1) durch Ausführen einer Simulation auf Basis der berechneten SOLL-Prozesspunkte.

2. Verfahren nach Anspruch 1, wobei das Fertigungssystem eine Spritzgießbearbeitung umfasst.

3. Verfahren nach einem der vorangehenden Ansprüche, bei dem die IST-Sensordaten einen Werkzeuginnendruck umfassen.

4. Verfahren nach einem der vorangehenden Ansprüche, bei dem das Fertigungssystem (1) eine Regelung eines Materialflusses umfasst, wobei produzierte Mengen an Maschinen, Arbeitsstationen und/oder während eines Transportes erfasst werden und wobei der Materialfluss durch einen Einstelldatensatz, umfassend Laufzeiten an Arbeitsplätzen und eine Zuordnung von Ressourcen, geregelt wird.

5. Verfahren nach einem der vorangehenden Ansprüche, bei dem zur Klassifikation ein Scheduling-Algorithmus mit kombinierten Dekompositionsverfahren angewendet wird.

6. Verfahren nach einem der vorangehenden Ansprüche, wobei bei dem Bestimmen des Einstelldatensatzes auch Störgrößen des Fertigungssystems (1) verrechnet werden.

7. Verfahren nach einem der vorangehenden Ansprüche, bei dem zur fehlerfreien Regelung des Fertigungssystems (1) Ausschussgründe erfasst werden, die zur Klassifikation verarbeitet werden.

8. Verfahren nach einem der vorangehenden Ansprüche, bei dem zur Optimierung der Simulation ein auf einer Response-Surface-Methode (RSM) basierter Algorithmus verwendet wird.

9. Verfahren nach einem der vorangehenden Ansprüche, bei dem zur Klassifikation ein Support-Vector-Machines (SVM)-Verfahren verwendet wird.

10. Verfahren nach einem der vorangehenden Ansprüche, bei dem das Fertigungssystem (1) mehrere Komponenten umfasst, die numerisch geregelt sind, und eine übergeordnete diskrete Regelung umfasst, die den numerischen Regelungen Führungsgrößen vorgibt.

11. Regelungssystem zur automatischen Regelung eines Fertigungssystems (1), umfassend:

   - Ein System (S) zum Erfassen von Sensordaten während des Betriebs des Fertigungssystems (1)
   - Einem Klassifikationsagenten (A), der zur Vorverarbeitung der erfassten IST-Sensordaten zum Zwecke der Klassifikation der erfassten Prozesswerte ausgelegt ist, um SOLL-Prozesspunkte für einen fehlerfreien Betrieb des Fertigungssystems (1) zu berechnen,
   - Einer Berechnungseinheit (P), die zum Bestimmen eines Einstelldatensatzes als Führungsgröße für das Fertigungssystem (1) dient, wobei die Berechnungseinheit (P) auf einen Simulationsbaustein (SIM) zugreift, der zum Ausführen einer Simulation auf Basis der berechneten SOLL-Prozesspunkte bestimmt ist.

12. Klassifikationsagent (A) zur Verwendung in einem Regelungssystem nach dem vorstehenden Systemanspruch, der zur Vorverarbeitung der erfassten Sensordaten zum Zwecke der Klassifikation der erfassten Prozesswerte ausgelegt ist, um SOLL-Prozesspunkte für einen fehlerfreien Betrieb des Fertigungssystems (1) zu berechnen.

13. Berechnungseinheit (P) zur Verwendung in einem Regelungssystem nach dem vorstehenden Systemanspruch, die zum Bestimmen eines Einstelldatensatzes als Führungsgröße für das Fertigungssystem (1) dient, wobei die Berechnungseinheit (P) auf einen Simulationsbaustein (SIM) zugreift, der zum Ausführen einer Simulation auf Basis der berechneten SOLL-Prozesspunkte bestimmt ist.

FIG. 1

FIG. 2

FIG. 3

# FIG. 4

**Bild 19-3**
beff, NO$_x$, HC
und SigmaPMI in
Abhängigkeit von
Einlass- und Auslassnockenwelle
– das Optimum
befindet sich im
rechten oberen
Eck

# FIG. 5

# FIG. 6

*Pressure Curves*

## FIG. 7

# Automatisches Six Sigma

GUT- Teil

SCHLECHT-
Teil

260

$T_m$ in °C

220

Trennende
Hyperebene

$t_{Verweilzeit}$ in

4                    10 min

➢ Entstehende GUT-
und SCHLECHT- Teile
werden
Prozesswerten
zugeordnet

➢ Bestehende Grenzen
zwischen GUT- und
SCHLECHT- Teilen
werden mathematisch
gefunden

➢ Über eine trennende
Hyperebene
ausgeschleust

## FIG. 8

# Automatisches Six Sigma

Six Sigma Sicherheit

260

$T_m$ in °C

Verarbeitungsfenste
r

220

$t_{Verweilzeit}$ in

4                    10 min

➢ Verarbeitungsfenster wird
eingegrenzt

➢ Mit einer
zusätzlichen
Six Sigma
Sicherheit
beaufschlagt

## FIG. 9

Kurvenänderung bei 3s Nachdruckzeit (N2 angussnah)

Auschusskurve 1 ——— Auschusskurve 2 ········· Auschusskurve 3
——— Auschusskurve 4 — · — Mittelwertkurve ——— Six Sigma Kurve

## FIG. 10

# FIG. 11

# FIG. 12

Häufige Fertigungsstruktur

# FIG. 13

Maschinen    Menu-System    ICON-Leiste    Kalender-System

Scroll-Leiste    Arbeitsgänge    Wochenende

# FIG. 14

*Machine 2*

| Jobs | 1 | 2 | 3 |
|------|---|---|---|
| $p_{2j}$ | 8 | 8 | 7 |
| $r_{2j}$ | 10 | 0 | 4 |
| $d_{2j}$ | 18 | 8 | 19 |

$L_{max}(1, 2, 3) = \max\{0, 18, 14\} = 18$
$L_{max}(1, 3, 2) = \max\{0, 6, 25\} = 25$
$L_{max}(2, 1, 3) = \max\{0, 0, 6\} = 6$
$L_{max}(2, 3, 1) = \max\{0, -4, 5\} = 5$
$L_{max}(3, 1, 2) = \max\{-8, 1, 19\} = 19$
$L_{max}(3, 2, 1) = \max\{-8, 7, 5\} = 7$

2,3,1    $L_{max}(2)=5$

05.06.2013           ISE480 Sequencing and Scheduling           28

# FIG. 15

Europäisches
Patentamt

European
Patent Office

Office européen
des brevets

# EUROPÄISCHER RECHERCHENBERICHT

Nummer der Anmeldung

EP 16 17 7749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2012 104885 A1 (HBF FERTIGUNGSSTEUERUNGSSYSTEME DR BAUER KG [DE]) 5. Dezember 2013 (2013-12-05) | 12 | INV.<br>G05B17/02<br>B29C45/76<br>G05B13/04 |
| Y | * das ganze Dokument * | 1-11 | G05B19/418 |
| | ----- | | |
| X | DE 10 2007 035274 A1 (EMERSON PROCESS MANAGEMENT [US]) 13. März 2008 (2008-03-13) | 13 | |
| Y | * Absatz [0001] - Absatz [0013] *<br>* Absatz [0020] - Absatz [0045] * | 1-11 | |
| | ----- | | |

**RECHERCHIERTE SACHGEBIETE (IPC)**

G05B
B29C

Der vorliegende Recherchenbericht wurde für alle Patentansprüche erstellt

| Recherchenort | Abschlußdatum der Recherche | Prüfer |
|---|---|---|
| München | 26. Januar 2017 | Kuntz, Jean-Marc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 7749

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2017

| Im Recherchenbericht angeführtes Patentdokument | Datum der Veröffentlichung | Mitglied(er) der Patentfamilie | Datum der Veröffentlichung |
|---|---|---|---|
| DE 102012104885 A1 | 05-12-2013 | DE 102012104885 A1<br>WO 2013182190 A1 | 05-12-2013<br>12-12-2013 |
| DE 102007035274 A1 | 13-03-2008 | CA 2594697 A1<br>CN 101114160 A<br>DE 102007035274 A1<br>GB 2440648 A<br>HK 1116552 A1<br>US 2008027704 A1 | 28-01-2008<br>30-01-2008<br>13-03-2008<br>06-02-2008<br>29-06-2012<br>31-01-2008 |

EPO FORM P0461

Für nähere Einzelheiten zu diesem Anhang : siehe Amtsblatt des Europäischen Patentamts, Nr.12/82

**EP 3 267 269 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104885 A1
- DE 102010037552 A1
- US 5578256 A
- US 7431870 B2

**In der Beschreibung aufgeführte Nicht-Patentliteratur**

- Regelungstechnik. Springer Vieweg Verlag, vol. 1, 1
- **WILHELM KLEPPMANN.** Versuchsplanung, Produkte und Prozesse optimieren. Hanser Verlag, 290-294